Europäisches Patentamt

European Patent Office

Office européen des brevets

(11) Veröffentlichungsnummer: **0 225 933**
A1

(12) **EUROPÄISCHE PATENTANMELDUNG**

(21) Anmeldenummer: 85115941.8

(22) Anmeldetag: 13.12.85

(51) Int.Cl.⁴: **G 06 F 15/74**

(43) Veröffentlichungstag der Anmeldung:
24.06.87 Patentblatt 87/26

(84) Benannte Vertragsstaaten:
AT BE CH DE FR GB IT LI NL SE

(71) Anmelder: Hydrotechnik GmbH
Holzheimer Strasse 94-96
D-6250 Limburg 1(DE)

(72) Erfinder: Ruge, Horst
Wilhelm Leuschner Strasse 156
D-6103 Griesheim(DE)

(72) Erfinder: Heger, Lothar
b. H. Horst R. Wilhelm Leuschner Strasse 156
D-6103 Griesheim(DE)

(74) Vertreter: Linser, Heinz et al,
Patentanwälte Heinz Linser Dipl. Ing. Eckhardt Eyer
Robert-Bosch-Strasse 12a Postfach 10 22 10
D-6072 Dreieich(DE)

(54) **Messvorrichtung.**

(57) Die Erfindung betrifft eine Vorrichtung zur mikroprozessorgesteuerten Erfassung. Verarbeitung, Anzeige, Speicherung und Ausgabe von analogen und/oder digitalen
Meßwerten mehrerer Meßstellen oder Sensoren, mit einem
Prozeßrechner in Verbindung mit einem sequentiell abtastenden Meßstellenumschalter, einem Analog-Digital- und
Digital-Analog-Wandler, mehreren Analogverstärkern und
Analog- und Digital-Speichern sowie einer Dateneingabevorrichtung und Steckkontakten für einen aufsteckbaren
Adapter.

Das Gerät erlaubt die quasi gleichzeitige Verarbeitung
von analogen und digitalen Meßwerten und weist digitale
nicht-echtzeitfähige und analoge echtzeitfähige Ausgangskanäle auf. Der Abgleich mit den zu verwendenden Sensoren
erfolgt in einer Version halbautomatisch und in einer
weiteren Version vollautomatisch.

EP 0 225 933 A1

FIG. IV

BESCHREIBUNG

Die Erfindung betrifft eine Vorrichtung zur mikroprozessorgesteuerten Erfassung, Verarbeitung, Anzeige, Speicherung und Ausgabe von analogen und/der digitalen Meßwerten mehrerer Meßstellen oder Sensoren, mit einem Prozeßrechner in Verbindung mit einem sequentiell abtastenden Meßstellenumschalter, einem Analog-Digital- und Digital-Analog-Wandler, mehreren Analogverstärkern und Analog- und Digital-Speichern sowie einer Dateneingabevorrichtung und Steckkontakten für einen aufsteckbaren Adapter.

Zur Erfassung, Verarbeitung, Anzeige, Speicherung und Ausgabe von analogen und/oder digitalen Meßwerten, insbesondere für einen mobilen Einsatz, ist man bestrebt, tragbare Geräte einzusetzen und hier vorzugsweise Geräte im Taschenformat, ähnlich einem Taschenrechner.

Zur Aufnahme physikalischer Werte, wie Drucke, Temperaturen oder anderer Meßwerte stehen entsprechende Sensoren zur Verfügung, welche sowohl digitale als auch analoge Signale abgeben. Zur Verbesserung der Ermittlung von Zustandgrößen oder Eigenschaften eines Systems, beispielsweise einer hydraulischen Anlage, ist es in vielen Fällen erforderlich oder wünschenswert, gleichzeitig Meßwerte von mehreren Sensoren aufzunehmen, unmittelbar zu verarbeiten und die Ergebnisse anzuzeigen oder zur Speisung eines Schreibers oder Druckers abzugeben.

Jeder Sensor weist eine Eigencharakteristik auf, welche beim Anschluß an ein Meß- und Auswertegerät zu berücksichtigen ist. Hierzu zählt insbesondere seine Nullpunktlage und sein vom Hersteller angegebene Endwert bzw. Meßbereich.

Beim Einsatz mehrerer Sensoren besteht daher das Problem, diese dem Meß- und Auswertegerät anzupassen. Es sind zwar bereits Sensoren bekannt, welche mit einer eigenen Kompensationsschaltung ausgerüstet sind, um diese ausreichend kompatibel zu gestalten, jedoch sind solche Sensoren sehr aufwendig und benötigen eine eigene Energieversorgung.

Mit der Kompensationsschaltung wird beispielsweise der Temperatureffekt ausgeglichen, jedoch nicht ein vorhandener Nullpunkt-Fehler, da sich dieser im Betrieb, durch Alterung, kurzfristige Überlastung oder dergleichen ändert.

Bei Analogmeßgeräten ist es bekannt, für jeden verwendeten Sensor beim Anschluß an das Meßgerät dort einen Abgleich durchzuführen, wobei durch Verstellung von Hand jeweils eines Potentiometers der Nullpunkt und der Endwert, d.h. sein Meßbereich eingestellt werden. Das Analogausgangssignal eines solchen Meßgerätes kann zur Beaufschlagung eines Schreibers verwendet werden.

Für die Verarbeitung von digitalen Eingangssignalen und die Anwendung von Mikroprozessoren zur Erhöhung der Leistungsdichte ist der Einsatz von digitalen Meßgeräten notwendig.

Der vorliegenden Erfindung liegt die Aufgabe zugrunde, Maßnahmen anzugeben und Mittel vorzuschlagen, um die Anpassung eines digitalen Meßgerätes an eine Vielzahl von Sensoren zu erleichtern und zu automatisieren. Der Erfindung liegt weiter die Aufgabe zugrunde ein digitales Meßgerät derart auszugestalten, daß mindestens ein Kanal vorhanden ist, von dem echtzeitfähige Ausgangssignale abgegeben werden.

Zur Lösung dieser Aufgabe ist bei der eingangs aufgeführten Vorrichtung

a: jeder Analogeingang über je einen Analogverstärker mit konstantem Verstärkungsfaktor und einem Meßstellenumschalter mit einem Analog-Digital-Wandler verbunden, der seinerseits über einen Prozeßrechner mit einem Digitalspeicher verknüpft ist, welcher einen einmalig gemessenen und analog verstärkten, digital gewandelten Nullpunkt-Fehler eines verwendeten Sensors abrufbar speichert;

b: der Digitalspeicher von der Dateneingabevorrichtung über den Prozeßrechner ansteuerbar und speichert einen über die Dateneingabevorrichtung eingegebenen Kalibrierwert eines verwendeten Sensors abrufbar als seinen Endwert, und

c: der Prozeßrechner über einen Digital-Analog-Wandler und einen Analogverstärker zur Ausgabe eines korrigierten Signals mit dem Ausgang verbunden.

Mit dem Ausgang eines Analogverstärkers ist zur Speicherung kurzzeitiger Signale vorteilhaft ein Analogspeicher verbunden, dessen Ausgang einen Abgriff im Meßstellenumschalter aufweist.

Im vom Grundgerät lösbaren Adapterteil ist nach der Erfindung zur Erzielung eines echtzeitfähigen Ausgangssignals ferner ein elektrisch betätigbarer Schalter vorhanden, dessen Eingang einerseits mit dem Ausgang eines prozeßrechnergesteuerten Digital-Analog-Wandlers und Analogverstärkers und andererseits mit dem Ausgang eines Analogverstärkers verbunden ist und dessen Ausgang einem abgleichbaren Ausgangsverstärker zugeführt ist.

Die Ausgangsverstärker im Adapterteil weisen in vorteilhafter Weise elektrisch abgleichbare Widerstände auf.

Die elektrisch steuer- und abgleichbaren Widerstände sind zur Durchführung eines automatischen Abgleichs mit Hilfe im Digitalspeicher gespeicherter sensorabhängiger Nullpunkt-Fehler und Kalibrier-Endwerte vom Digital-Analog-Wandler prozeßgesteuert abgleichbar.

Die elektrisch-steuerbaren Widerstände sind ferner als Feldeffekt-Transistoren ausgebildet, welche in einer Ausführungsform der Erfindug jeweils über einen Digital-Analog-Wandler mit Hilfe des Prozessors ansteuerbar sind.

In einer abgewandelten Ausführungsform der Erfindung sind die Feldeffekt-Transistoren von einem gemeinsamen Digital-Analog-Wandler mit Hilfe eines prozessorgesteuerten Schalters sequentiell ansteuerbar, wobei der erreichte Ansteuerungswert in einem dem Feldeffekt-Transistor zugeordneten Analogspeicher gespeichert wird, bis dieser Wert durch einen anderen ersetzt wird.

Die Erfindung wird anhand der Zeichnungen näher beschrieben. Hierbei zeigen:

FIGUR 1 die Grundschaltung eines von Hand abgleichbaren Verstärkers eines rein analogen Meßgerätes, nach dem Stand der Technik;

FIGUR 2 die Grundschaltung eines halbautomatisch abgleichbaren Ausgangsverstärkers mit Prozessor, für einen Kanal, nach der Erfindung;

FIGUR 3 die Grundschaltung eines vollautomatisch abgleichbaren Ausgangsverstärkers mit Prozessor, für einen Kanal, gemäß einer weiteren Ausführungsform der Erfindung, und

FIGUR 4 die schematische Gesamtschaltung des Grundgerätes mit Adapter.

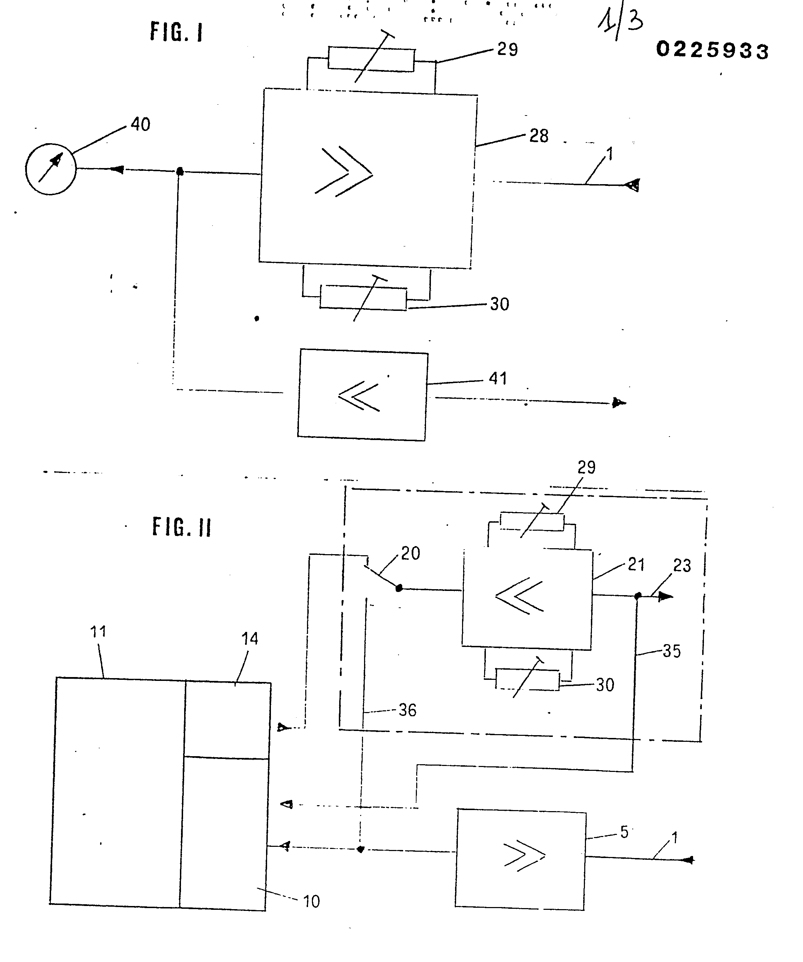

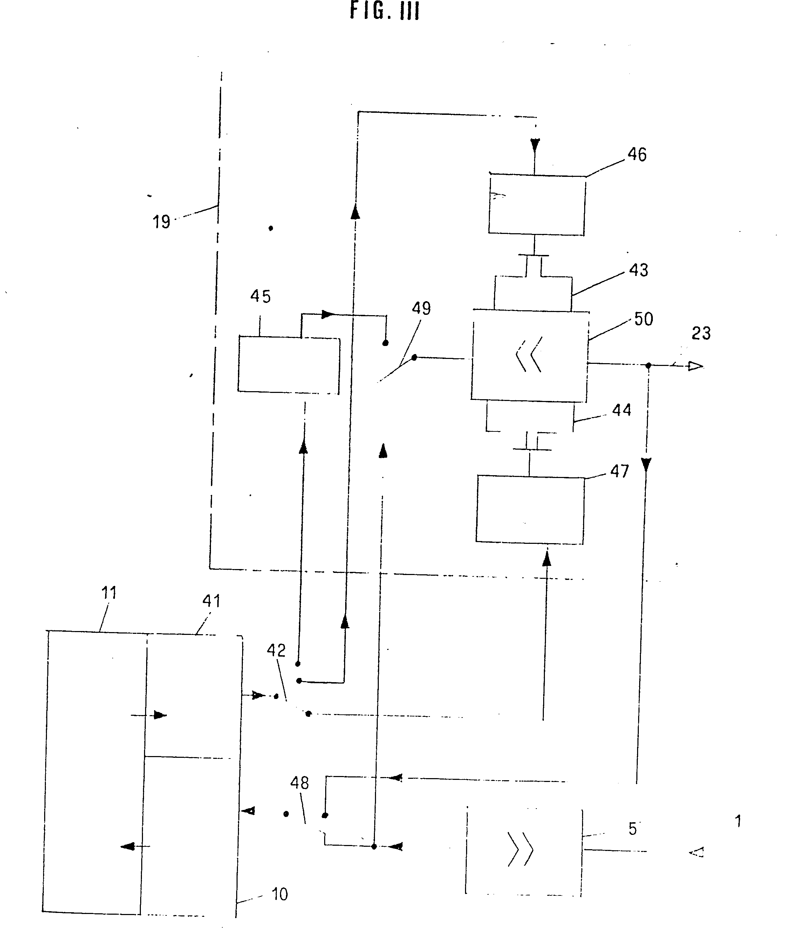

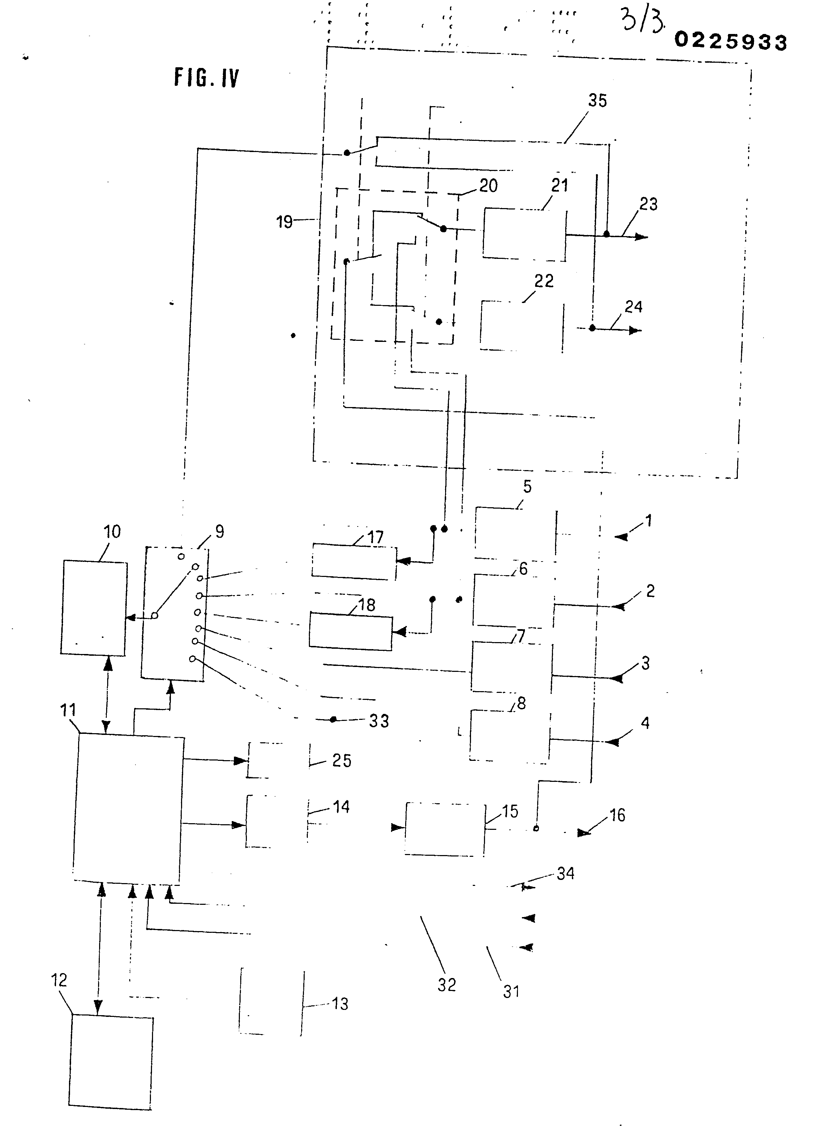

In der Figur 1 ist als Stand der Technik die Grundschaltung eines von Hand abgleichbaren Verstärkers eines rein analogen Meßgerätes schematisch dargestellt. Der Meßeingang 1 liegt an dem abgleichbaren analogen Eingangsverstärker 28, dessen Ausgang zur Anzeigevorrichtung führt. Der Ausgang des Analogverstärkers weist einen Abgriff auf, der über einen Ausgangsverstärker 41 zu einem weiteren Auswertegerät, wie etwa einem nicht dargestellten Schreiber geleitet ist. Die Potentiometer 29 und 30 sind von Hand verstellbar ausgebildet, so daß für jeden verwendeten Sensor beim Anschluß an das Meßgerät ein Abgleich durchgeführt werden muß, indem durch Verstellung von Hand jeweils eines Potentiometers der Nullpunkt und der Endwert, d.h. sein Meßbereich eingestellt werden.

Das Analogausgangssignal eines solchen Meßgerätes kann zur Beaufschlagung eines Schreibers direkt verwendet werden, wie bereits eingangs ausgeführt ist. Ein solcher Abgleich ist sehr zeitaufwendig.

Die Figur 2 zeigt die Grundschaltung eines halbautomatisch abgleichbaren Ausgangsverstärkers mit Prozessor für einen Kanal eines digitalen Meßgerätes. Der analoge Meßeingang 1 führt über einen Eingangsverstärker 5 zu einem Analog-Digital-Wandler 10 und weiter über einen Prozessor 11 zu einem Digital-Analog-Wandler 14. Das hier vorliegende analoge Signal wird über einen Schalter 20 und Ausgangsverstärker 21 dem analogen Ausgang 23 zugeleitet. Die Widerstände 29 und 30 lassen sich von Hand abgleichen, wobei der Widerstand 29 für den Endabgleich oder die Kalibrierung bestimmt ist und der Widerstand 30 dem Nullpunktabgleich dient. Zur Erzielung eines echtzeitfähigen Signals bei einem digitalen Meßgerät ist der Ausgang 23 über die Leitung 35 mit dem Analog-Digital-Wandler 10 und der Ausgang des Eingangsverstärkers 5 über die Leitung 36 mit dem Schalter 20 verbunden. Anhand der Gesamtschaltung nach Figur 4 wird später hierauf noch näher eingegangen.

Die Figur 3 zeigt die schematische Schaltung eines Ein- und Ausgangskanals eines digitalen Meßgerätes mit vollautomatischem Abgleich und einem echtzeitfähigen Signalausgang. Die Positionen 10, 11 und 41 verkörpern das Grundgerät aus Analog-Digital-Wandler, Rechner und Digital-Analog-Wandler.

Der Analog-Eingang 1 führt über einen Eingangsverstärker 5 mit konstanter Verstärkung. Die Anpassung des Verstärkers erfolgt hierbei rechnerisch. Die Schalter 42, 48 und 49 sind Meßstellen- oder Steuerspannungsumschalter. Die gestrichelte Linie 19 deutet an, daß die eingerahmten Elemente in dem Adapterteil untergebracht sind.

Dieses Teil ist mit dem Grundgerät zusammensteckbar ausgebildet. Der Ausgangsverstärker 50 ist mit elektrisch steuerbaren Widerständen 43 und 44 ausgerüstet, welche als Feldeffekt-Transistoren ausgebildet sind. Vor jedem Feldeffekt-Transistor 43 und 44 liegt jeweils ein Analogspeicher 46 bzw. 47, welcher die zur Aufrechterhaltung des gewünschten Widerstandes erforderliche Steuerspannung speichert, wie sie vom Digital-Analog-Wandler 41 zur Verfügung gestellt und so lange variiert wird, bis der gewünschte Widerstand durch eine sukzessive Aproximation erreicht ist. Der Digital-Analog-Wadler verläßt sodann diesen Kanal und der zugehörige Analogspeicher übernimmt die weitere Aufrechterhaltung der Spannung bzw. des sich daraus ergebenden Widerstandes. Der Analogspeicher 46 mit dem Feld-Effekt-Transistor 43 dient hierbei zur Einstellung des Verstärkungsfaktors des Verstärkers 50, während der Analogspeicher 47 mit dem Feld-Effekt-Transistor 44 zur Einstellung des Nullpunktes dient.

Der Eingang des Verstärkers 50 ist durch den Schalter 49 umschaltbar, und zwar einmal auf den Analogspeicher 45 und zum anderen direkt auf das auszugebende Analogsignal. In der normalen Betriebsphase, d.h. wenn der Verstärker 50 abgeglichen ist, ist der Schalter 49 auf den Analog-Eingangsverstärker 5 geschaltet und das fehlerbehaftete Eingangssignal läuft über den Eingangsverstärker 5. Der Endwert steht noch in keinem Bezug zum Meßbereichsendwert und ein Nullpunktsfehler ist ebenfalls noch vorhanden. Ist der Verstärker 50 wie oben aufgeführt, Fehlerkorrigiert, ergibt sich die gewünschte Konfiguration, d.h. am Ausgang 23 erscheint ein korrigiertes Singnal in Echtzeit.

Zum erforderlichen Abgleich der beiden Widerstände 43 und 44 wird der Schalter 49 vom Analogeingang abgetrennt und wird an den Analogspeicher 45 gelegt. Der Rechner speist über den Digital-Analog-Wandler 41 und den Schalter 42 in der obersten Stellung eine Kalibrierspannung in den Analogspeicher, welche dort gehalten wird. Der Rechner mißt über den Digital-Analog-Wandler 41 und über den Schalter 48 in der oberen Stellung die Ausgangsspannung des Verstärkers 50.

Wenn die eingespeiste Eingangsspannung Null Volt beträgt oder eine Spannung, die den gespeicherten Nullpunktfehler wiedergibt, kann der Nullpunkt des Ausgangsverstärkers abgeglichen werden.

In ähnlicher Weise wird der Endwert kalibriert. Die Analogspeicher 45, 46 und 47 sorgen dafür, daß während der Umschaltung des Schalters 42 die zuvor aufgeprägte Korrekturspannung für den Nullpunkt und die Kalibrierspannung erhalten bleibt, bis diese durch neue Werte ersetzt werden. Die Feld-Effekt-Transistoren werden daher auch während der Schaltvorgänge des Schalters 42 mit der erforderlichen Spannung beaufschlagt, so daß der notwendige Abgleich des Verstärkers in jeder Betriebsphase sichergestellt ist.

Die Figur 4 zeigt die Gesamtschaltung des digitalen Meßgerätes mit Adapter 19, wobei der Adapter hierbei die halbautomatische Ausführungsform nach Figur 2 aufweist, welche jedoch durch die vollautomatische Version nach Figur 3 ersetzt werden kann. In bezug auf die Figuren 2, 3 und 4 sind gleiche Elemente mit gleichen Bezugszeichen versehen.

Die Analogeingänge 1, 2, 3, und 4 sind über je einen Analogverstärker 5, 6, 7 und 8 mit konstantem Verstärkungsfaktor und einem Meßstellenumschalter 9 mit einem Analog-Digital-Wandler 10 durchgeschaltet, welcher seinerseits über einen Prozeßrechner 11 mit einem Digitalspeicher 12 verknüpft ist. Die Verwendung eines Eingangsverstärkers mit konstantem Verstärkungsfaktor ist nach der Erfindung deswegen möglich, weil die dem Eingangsverstärker anhaftenden Fehler (Offset-Spannung) mit Hilfe des Prozessors im Zusammenhang mit dem Nullpunkt-Abgleich, welcher im folgenden noch näher beschrieben wird, rechnerisch ausgeglichen bzw. korrigiert werden.

Der Digitalspeicher 12 speichert einen einmalig gemessenen und analog verstärkten sowie digital gewandelten Nullpunkt-Fehler eines verwendeten Sensors. Dieser Wert ist jederzeit abrufbar.

Dem Digitalspeicher 12 werden ferner von der Datenteingabevorrichtung 13 über den Prozeßrechner 11 Daten eingespeist, welche den vorgegebenen Kalibrierwerten eines verwendeten Sensors entsprechen. Diese Werte sind sodann als sein Endwert gespeichert und zu jeder Zeit abrufbar.

Der Prozeßrechner 11 ist über einen Digital-Analog-Wandler 14 und einen Analogverstärker 15 zur Ausgabe eines nicht-echtzeitfähigen, korrigierten Signals mit dem Ausgang 16 verbunden.

Zur Speicherung kurzzeitiger Signale ist ein Analogspeicher 17 bzw. 18 mit dem Ausgang eines Analogverstärkers 5 bzw. 6 verbunden, dessen Ausgang einen Abgriff im Meßstellenumschalter 9 aufweist.

Im Adapterteil 19 ist ein elektrisch betätigbarer Schalter 20 vorhanden, dessen Eingang einerseits mit dem Ausgang 16 eines prozeßgesteuerten Digital-Analog-Wandlers mit Analogverstärker 15 und andererseits mit dem Ausgang eines Analogverstärkers 5 bzw. 6 verbunden ist und dessen Ausgang einem abgleichbaren Ausgangsverstärker 21 bzw. 22 zugeführt ist. Der Ausgang 23 bzw. 24 des Ausgangsverstärkers 21 bzw. 22 ist mit dem Meßstellenumschalter 9 verbunden.

Der Ausgangsverstärker 21 bzw. 22 im Adapter 19 weist elektrisch abgleichbare Widerstände 26 bzw. 27 auf. Die elektrisch steuerbaren Widerstände 26 bzw. 27 sind zur Durchführung eines in diesem Falle halbautomatischen Abgleichs mit Hilfe der im Digitalspeicher 12 eingespeicherter sensorabhängiger Nullpunkt-Fehler und Kalibrier-Endwerte vom Analog-Digital-Wandler 10 prozeßgesteuert abgleichbar.

Der Teil dieser Schaltung kann, wie bereis oben ausgeführt, durch die Schaltung nach Figur 3 ersetzt werden, so daß ein vollautomatischer Abgleich durchgeführt werden kann..

Die Vorrichtung nach der Erfindung ist ferner mit einem digitalen Meßeingang 31, 32 und einem digitalen Ausgangskanal 34 ausgerüstet, welcher beispielsweise einen Drucker beaufschlagt.

Der Anschluß 33, welcher mit der nicht näher dargestellten Energiequelle verbunden ist, dient der Messung und Überwachung der eigenen Stromversorgung. Über diesen Meßeingang kann der Rechner den Zustand seiner eigenen Batterie ständig messen.

Mit dem hier beschriebenen Gerät nach der Erfindung können zwei Druckmeßstellen und zwei Temperaturmeßstellen quasi gleichzeitig verarbeitet werden. Es können somit alle Kanäle besetzt sein, wobei deren Meßwerte dem Rechner sequentiell zugeführt werden. Die Signale der nicht näher dargestellten Druckaufnehmer-Sensoren werden auf zwei Kanäle des als Multiplexer ausgebildeten Meßstellenumschalters 9 direkt und parallel dazu auf zwei weitere Kanäle geschaltet, denen jeweils ein schneller Analogspeicher 5 und 6 vorgeschaltet ist.

Dieses Verfahren erlaubt die Erfassung von Druckspitzen in einer wesentlich kürzeren Zeit, als es die Umlaufzeit des Multiplexers und die zu jedem Kanal anfallende Wandlungszeit des Analog-Digital-Wandlers 10 zulassen würde.

Die natürliche Nullpunktabweichung eines jeden verwendeten Sensors wird einmalig vom Gerät selbst gemessen und die Größe dieser Abweichung im Digitalspeicher 12 abgelegt. Der vom Hersteller der Druckaufnehmer-Sensoren ermittelte Kalibrierwert, d.h. die Skalierung des Messbereich-Endwertes der jeweils verwendeten Sensoren wird vom Bediener über die Tastatur der Dateneingabe 13 in den Digitalspeicher 12 eingeschrieben. Anstelle der Tastatur kann auch ein Strichcodeleser verwendet werden, wobei jeder Sensor seine Kalibrierwerte in Form eines Strichcodes aufweist. Hierdurch werden Fehleintastungen oder Verwechselungen mit einem Datenblatt vermieden.

Bei jeder nun anfallenden Druckmessung werden wieder die im Speicher abgelegten Daten für die Berechnung des Absolutdruckes aus dem aktuellen Meßwert herangezogen. Einmal im Speicher abgelegt, verbleiben diese Kalibrierdaten dort, bis sie vom Bediener neu überschrieben werden. So entfällt bei einem Wechsel des oder der Aufnehmersysteme der üblicherweise komplette Neuabgleich des Analog-Eingangsverstärkers.

Die Übernahme des tatsächlichen Nullpunktfehlers als neuen Bezugsnullpunkt, erlaubt auch das Messen eines Absolutdruckes über einem bestimmten vorhandenen Vordruck z.B. Messung in einem mit Flüssigkeit gefüllten System, bei dem das Gewicht der über dem Geber stehenden Flüssigkeitsmenge diesen bereits mit einem statischen Druck vorbelastet.

Bei der Abfrage der Analogspeicher statt der direkten Druckmeßkanäle durch den Rechner, können statt der effektiven Druckwerte die zuletzt am jeweiligen Druckmeßkanal aufgetretenen Druckspitzen verarbeitet werden. Die vorerst analog und nach der Abfrage digital gespeicherten Druckspitzen bleiben als Meßwert erhalten, bis sie durch eine auftretende größere Druckspitze überschrieben werden oder können vom Bediener durch eine Tastatureingabe gelöscht und für eine neue, von Null ausgehende Spitzenmessung, vorbereitet werden.

Durch die gleichzeitige Verarbeitung von zwei getrennten Meßstellen und die Verwendung eines Rechners, ist auch eine Summen- bzw. Differenz-Darstellung der Meßwerte möglich.

Die Vorrichtung nach der Erfindung weist zwei weitere Eingangskanäle 3 und 4 auf, welche für Temperaturmessungen bestimmt sind. Hierbei entfallen die schnellen Analogspeicher, wie sie für Druckmessungen durch die Speicher 17 und 18 vorgesehen sind, da sich die Temperaturänderungen im Vergleich zu den Druckänderungen nur relativ langsam vollziehen.

Auch ist bei den Temperaturgebern eine vollautomatische Kalibrierung nicht erforderlich, da vorwiegend genormte Aufnehmer verwendet werden, die bei einem Wechsel keinen Neuabgleich erforderlich machen. Grundsätzlich ist es natürlich auch hier möglich, einen vollautomatischen Abgleich durchzuführen, wenn dies erforderlich sein sollte.

Mit der Vorrichtung nach der Erfindung ist es auch möglich, digitale Meßwerte aufzunehmen und zu verarbeiten.

Derartige Werte ergeben sich beispielsweise bei der Drehzahlmessung. Hierzu werden die Digital-Meßkanäle 31 und 32 zur direkten Verarbeitung von Impulsen eines digitalen Aufnehmersystems, z.B. Wellenumdrehungen pro Zeiteinheit, verwendet.

Ähnlich der Drehzahlmessung lassen sich auch Volumenströme messen und Durchflußmessungen durchführen. Hierbei werden jedoch die vom Aufnehmersystem gelieferten Zählimpulse pro Zeiteinheit nicht direkt verarbeitet.

Der Bediener hat die Möglichkeit über die Tastatur einen Formfaktor im Digitalspeicher abzulegen. Dieser Faktor enthält Daten wie beispielsweise Gerätekonstante einer Meßturbine, Einfluß der Viskosität des die Turbine antreibenden Mediums unnnd dergleichen. Aus dem eigentlichen Meßwert und diesem im Speicher abgelegten Faktor, wird dann rechnerisch die tatsächliche Meßgröße ermittelt und zur weiteren Verarbeitung bereitgestellt.

Folgende Meßgrößen stehen zur Verarbeitung bereit:

1. Druck am Druckmeßkanal 1,

2. Druck am Druckmeßkanal 2,

3. Druck-Spitzenwert am Druckmeßkanal 1,

4. Druck-Spitzenwert am Druckmeßkanal 2,

5. Differenzdruck der beiden Druckmeßkanäle 1 und 2,

6. Temperatur am Temperaturmeßkanal 3,

7. Temperatur am Temperaturmeßkanal 4,

8. Differenztemperatur der beiden Temperaturmeßkanäle 3 und 4,

9. Drehzahl am Digitalkanal 31 und

10. Volumenstrom am Digitalkanal 32.

Auf die zur Verfügung stehenden Meßgrößen können die folgenden Verarbeitungs-Verfahren vom Bediener frei wählbar angewendet werden.

1. Anzeige

Das Gerät nach der Erfindung besitzt beispielsweise eine LCD-Punktmatrix-Anzeige mit zwei Zeilen zu je 16 Zeichen. Bis zu zwei Meßgrößen können mit ihren jeweiligen Meßeinheiten gleichzeitig dargestellt werden.

Während der Messung kann der Bediener von den beiden momentan angezeigten Werten auf beliebige andere Werte umschalten.

2. Hintergrundspeicherung

Die auftretenden Druckspitzen der beiden Druckmeßkanäle werden laufend im Speicher abgelegt, auch wenn sie nicht zur Anzeige aufgerufen sind. Sie können per Tastendruck aufgerufen werden.

3. Fortlaufende Ablage im Speicher

In einem vom Bediener wählbaren Zeittakt können die Meßgrößen eines ebenfalls wählbaren Meßkanals der Reihe nach im Speicher abgelegt werden. Dieser Vorgang läuft automatisch ab, maximal bis zum Erreichen des Speicher-Fassungsvermögens.

0225933

Die so abgespeicherten Daten können zu einem späteren Zeitpunkt - auch nach zwischenzeitlichem Ausschalten des Gerätes - über eine serielle Datenschnittstelle an einen Drucker oder Auswerterechner übergeben werden.

4. Analogausgabe (Schreiberausgang)

Die erfaßten Meßwerte eines Analogkanals können in ihrer vorliegenden, unkorrigierten Form, wieder analog ausgegeben werden. Das Ausgangssignal ist dem Eingangssignal proportional, lediglich seine Größe ist in bezug auf die Schnittstelle normiert.

HY 8177

0225933

PATENTANSPRÜCHE

1. Vorrichtung zur mikroprozessorgesteuerten Erfassung, Verarbeitung, Anzeige, Speicherung und Ausgabe von analogen und/oder digitalen Meßwerten mehrerer Meßstellen oder Sensoren, mit einem Prozeßrechner in Verbindung mit einem sequentiell abtastenden Meßstellenumschalter, einem Analog-Digital- und Digital-Analog-Wandler, mehreren Analogverstärkern und Analog- und Digital-Speichern sowie einer Dateneingabevorrichtung und Steckkontakten für einen aufsteckbaren Adapter, dadurch gekennzeichnet, daß

a: jeder Analogeingang (1, 2, 3, 4) über je einen Analogverstärker (5, 6, 7, 8) mit konstantem Verstärkungsfaktor und einem Meßstellenumschalter (9) mit einem Analog-Digital-Wandler (10) verbunden ist, der seinerseits über einen Prozeßrechner (11) mit einem Digitalspeicher (12) verknüpft ist, welcher einen einmalig gemessenen und analog verstärkten, digital gewandelten Nullpunkt-Fehler eines verwendeten Sensors abrufbar speichert;

b: der Digitalspeicher (12) von der Datenteingabevorrichtung (13) über den Prozeßrechner (11) ansteuerbar ist und einen über die Dateneingabevorrichtung (13) eingegebenen Kalibrierwert eines verwendeten Sensors als seinen Endwert abrufbar speichert, und

c: der Prozeßrechner (11) über einen Digital-Analog-Wandler (14) und einen Analogverstärker (15) zur Ausgabe eines korrigierten Signals mit dem Ausgang (16) verbunden ist.

2. Vorrichtung nach Anspruch 1, dadurch gekennzeichnet, daß mit dem Ausgang eines Analogverstärkers (5, 6) zur Speicherung kurzzeitiger Signale ein Analogspeicher (17, 18) verbunden ist, dessen Ausgang einen Abgriff im Meßstellenumschalter (9) aufweist.

0225933

3. Vorrichtung nach Anspruch 1 oder 2, dadurch gekennzeichnet, daß im Adapterteil (19) ein elektrisch betätigbarer Schalter (20) vorhanden ist, dessen Eingang einerseits mit dem Ausgang (16) eines prozeßgesteuerten Digital-Analog-Wandlers mit Analogverstärker (15) und andererseits mit dem Ausgang eines Analogverstärkers (5, 6) verbunden ist und dessen Ausgang einem abgleichbaren Ausgangsverstärker (21, 22) zugeführt ist, und der Ausgang (23, 24) des Ausgangsverstärkers (21, 22) mit dem Meßstellenumschalter (9) verbunden ist.

4. Vorrichtung nach Anspruch 1 oder 2, dadurch gekennzeichnet, daß der Ausgangsverstärker (21, 22) im Adapter (19) elektrisch abgleichbare Widerstände (26, 27) aufweist.

5. Vorrichtung nach Anspruch 1, 2 oder 3, dadurch gekennzeichnet, daß die elektrisch steuerbaren Widerstände (26, 27) zur Durchführung eines automatischen Abgleichs mit Hilfe im Digitalspeicher (12) gespeicherter sensorabhängiger Nullpunkt-Fehler und Kalibrier-Endwerte vom Analog-Digital-Wandler (10) prozeßgesteuert abgleichbar sind.

6. Vorrichtung nach Anspruch 4 oder 5, dadurch gekennzeichnet, daß die elektrisch-steuerbaren Widerstände als Feldeffekt-Transistoren (43,44) ausgebildet sind, welche jeweils über einen Digital-Analog-Wandler mit Hilfe des Prozessors (11) ansteuerbar sind.

7. Vorrichtung nach Anspruch 4 oder 5, dadurch gekennzeichnet, daß die elektrisch-steuerbaren Widerstände als Feldeffekt-Transistoren (43,44) ausgebildet sind, welche von einem gemeinsamen Digital-Analog-Wandler (41) mit Hilfe eines prozessorgesteuerten Schalters (42) sequentiell ansteuerbar sind und der erreichte Ansteuerungswert jeweils in einem dem Feldeffekt-Transistor zugeordneten Analogspeicher (45,46, und 44) gespeichert wird, bis dieser Wert durch einen anderen ersetzt wird.

8. Vorrichtung nach Anspruch 1 oder einem der voranstehenden Ansprüche, dadurch gekennzeichnet, daß mindestens ein digitaler Meßeingang (31, 32) und ein digitaler Ausgangskanal (32) vorhanden sind.

9. Vorrichtung nach Anspruch 1 oder einem der voranstehenden Ansprüche, dadurch gekennzeichnet, daß die Dateneingabe (13) als Tastatur und/oder als Anschluß für einen Strichcode-Leser ausgebildet ist.

FIG. I

1/3

0225933

FIG. II

FIG. III

2/0225933

FIG. IV

## Europäisches Patentamt

# EUROPÄISCHER RECHERCHENBERICHT

Nummer der Anmeldung

**0225933**

EP 85 11 5941

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-2 092 846 (HONEYWELL INC.) <br> * Seite 1, Zeile 105 - Seite 2, Zeile 39; Seite 4, Zeilen 37-51; Figuren 1,3 * | 1,2,8 | G 06 F 15/74 |
| | --- | | |
| A | US-A-4 089 058, (MURDOCK) <br> * Zusammenfassung * | 1 | |
| | ----- | | |

**RECHERCHIERTE SACHGEBIETE (Int Cl 4)**

G 06 F 15/74

Der vorliegende Recherchenbericht wurde für alle Patentansprüche erstellt

| Recherchenort <br> DEN HAAG | Abschlußdatum der Recherche <br> 14-08-1986 | Prüfer <br> SONIUS M.E. |
|---|---|---|